# EUROPEAN PATENT APPLICATION

(11) **EP 0 573 721 A1**
(43) Date of publication of application: **15.12.1993**
(21) Application number: 92480079.0
(22) Date of filing: 10.06.1992
(51) Int. Cl.: H04M 11/06, H04L 27/00, H03M 1/00

(54) **Coupling device for allowing the connection to a public switched telephone network, and DCE or personal system using the same**

(71) Applicant: International Business Machines Corporation, Armonk, N.Y. 10504 (US)
(72) Inventor: Glaume, Philippe, F-06220 Vallauris (FR); Martin, Jean, F-06800 Cagnes sur Mer (FR)
(74) Representative: Schuffenecker, Thierry

(57) **Abstract**

Coupling device or Direct Access Arrangement (DAA) for the connection of a system such as a Data Circuit Terminating equipment (DCE) or still a computer to a Public Switched Telephone network (PSTN) including a sigma-delta coder (103) for generating a train of sigma-delta pulses representative of the analog signal which is conveyed for the telephone line, and a first set of optical-couplers forming an optical barrier between the personal computer and the telephone line. Static relays such as optical couplers also used for introducing an additional optical barrier between the coupling device and the switching leads which are traditionaly used for controlling the switching functions such as seizing and decadic pulsing. Since all the signals exchanged between the system and couplers are in in digital and isolated from the personal system by means of an optical barrier, there no need for an additional transformer. Moreover, the amount of distorsion remains at a low level and the suppression of the line transformer saves physical surface of the Printed circuit board forming the coupler which facilitates its miniaturisation. At last, since all signals which are exchanged between the coupling interface of the invention and the system to which it is connected, are digital, the design of the personal system is also made easier.

## Description

### Technical field of the invention

The invention relates to a coupling device for allowing the connection of a Data Circuit Terminating Equipment or a personal system to a Public Switched Telephone Network.

Coupling interfaces, also known as Direct Access Arrangements (DAA) are used for the connection of systems, such as data processing systems to the Public Switched Telephone networks.

An example of such a coupler is described in european patent application 90480204.8 entitled "Coupling device to be connected to a DCE for the connection to a Public Switched Telephone Network" and assigned to the assignee of the present patent application. The coupler provides the interface between a DCE or a personal system or still a portable personal system, with the telephone network to which the latter is to be connected. For that purpose, the coupler should prevent the following characteristics: firstly, it assures a galvanic isolation between the system and the telephone network so that the latter will not be perturbed by the connection. Secondly, the coupler allows a bi-directional transmission of the analog signal between the telephone network and the personal system with a minimum amount of distorsion, particularly in the european countries where the level of the analog signal is high, ie the emission power transmitted through the network is high. The amount of distorsion rate, which is measured by the Total Harmonic Distorsion (THD) rate, is particularly critical for high speed full-duplex transmissions (such as CCITT V32 transmissions) involving sophisticated echo cancellation devices requiring high signal/noise ratios. At last, it is highly desired that the coupling device occupies the smaller place so that it can be used for small systems such as portable systems, lap-tops, or still conforms to the credit card size PCMCIA standart, defined by the Personal Computer Memory Card International Association (PCMCIA).

Known couplers are embodied by means of discrete components and particularly a line transformer for allowing the transmission of the analog signal between the system and the telephone line, while assuring the necessitated galvanic isolation. However, the use of line transformers in coupling devices presents some major drawbacks. Firstly, such transformers introduce a great amount of distorsion thus making very difficult their use for high speed full duplex transmission rates, e.g. 19200 kbps. The design of a transformer presenting a very low amount of distorsion, for instance having distorsion rate of -80 dB, is still possible but unfortunately appears very costly. Moreover, because of its physical dimensions, such a transformer would occupy too much place on the surface of the coupler Printed Circuit Board.

### Summary of the invention.

The problem to be solved by the object of the present invention is to provide a coupling interface circuit for the connection of a DCE (Data Circuit Terminating Equipment) or a personal system to a Public Switched telephone network which allows the use of high speed data transmission with a low amount of distorsion introduced, while minimizing the required dimensions so that the coupling circuit can be used for small personal systems.

This problem is solved by the coupling device according to the present invention for allowing the connection of a system such as a Data Circuit Terminating equipment (DCE) or a computer to a Public Switched Telephone network (PSTN) which includes an A/D converter such as a sigma-delta coder for generating a train of sigma-delta pulses representative of the analog signal which is conveyed for the telephone line, and a first set of optical-couplers forming an optical barrier between the personal computer and the telephone line. Static relays such as optical couplers also used for introducing an additional optical barrier between the coupling device and the switching leads which are traditionaly used for controlling the switching functions such as seizing and decadic pulsing. Since the analog signal is converted into digital pulses and then digitally transmitted through the first optical barrier, the amount of distorsion remains at a low level. Morover, the transformer which is traditionaly used for interfacing the telephone line with the system is suppressed what saves a great amount of physical surface and authorizes the miniaturization of the coupling interface. At last, since all signals which are exchanged between the coupling interface of the invention and the system to which it is connected, are digital, the design of the system is made easier.

In a preferred embodiment of the invention, the coupling device includes a sigma-delta coder having a threshold device for generating an output and feedback signal, a filter receiving said analog input signal and said output and feedback signal by means of at least one feedback loop. The coder further includes means which are located in said at least one feedback loop for performing a return-to-specified-logical-state of the sigma-delta code generated by said threshold device at every period of the sigma-delta clock whereby the converter is insensitive to the asymmetry of the rise and fall time of the threshold device. Preferrably, the sigma-delta coder is based on a double-loop structure so that to provide a high signal-to-noise ratio of the sigma-delta conversion.

### Description of the drawings.

Figure 1 illustrates a synoptic view of the coupling interface of the invention.

Figure 2 is a view of the hybrid part of the coupling interface of the invention.

Figure 3 illustrates the sigma-delta converter which is used in the coupling interface of the invention.

Figure 4 is a view of the PSTN line adaptation circuit of the coupling interface.

Figure 5 shows the structure of power supply circuit of the coupling interface.

Description of a preferred embodiment of the invention.

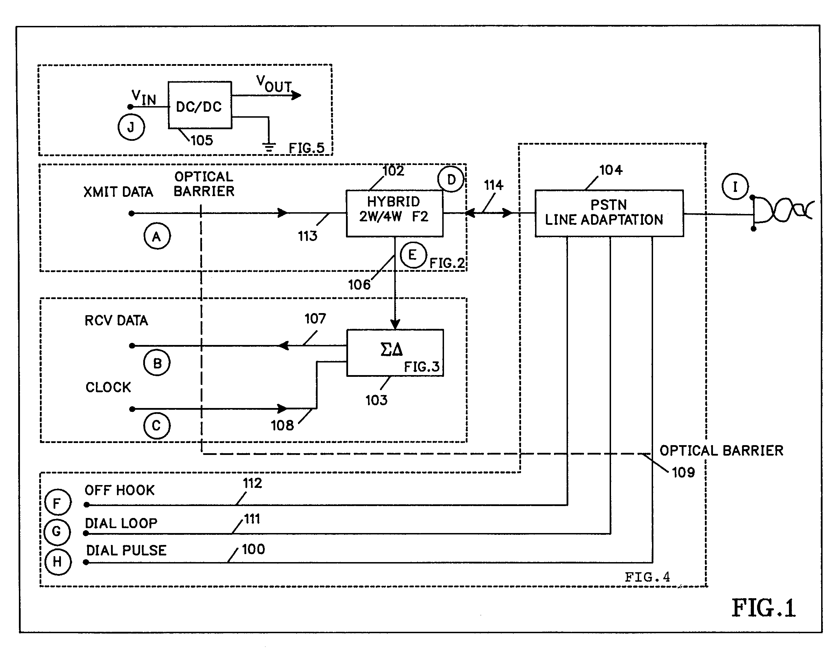

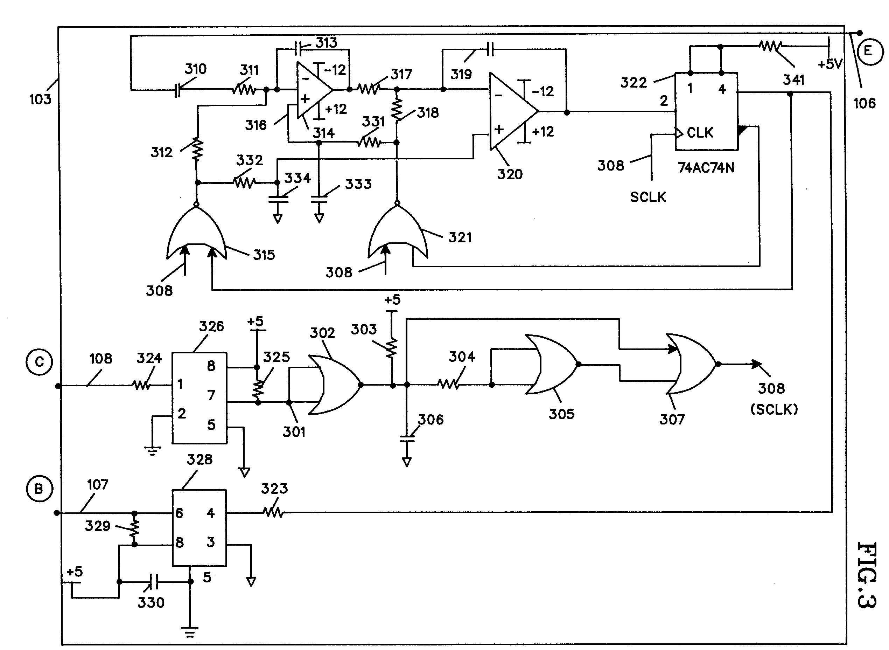

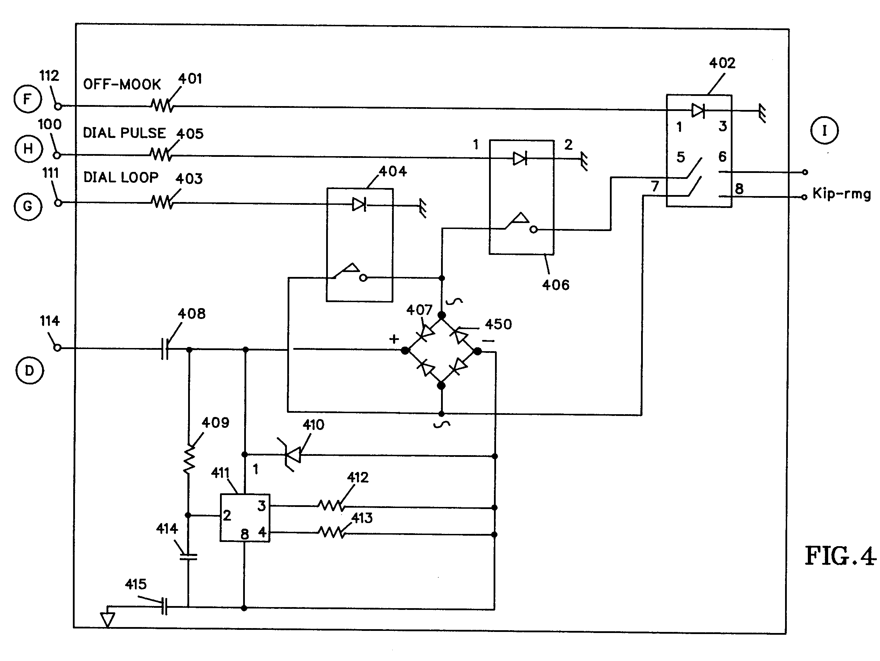

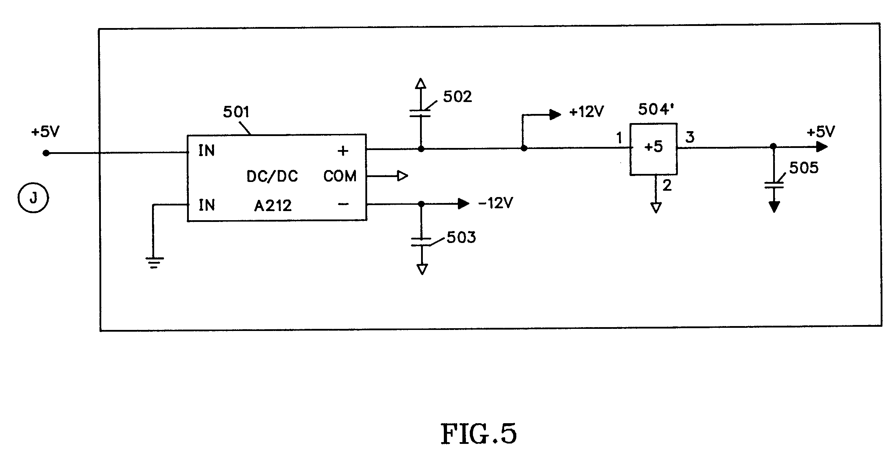

With respect to figure 1, there is illustrated a synoptic view of the coupling interface circuit according to the present invention. The coupler comprises a PSTN line adaptation circuit 104 which performs a electrical adaptation of the signal exchanged with the tip-rings leads of the telephone line. Line adaptation circuit 104, which will be described hereinafter with more details with respect to figure 4, is controlled by OFF-HOOK lead 112, DIAL PULSE lead 100 and DIAL LOOP lead 111 which provides the traditional seizing and decadic pulsing functions. PSTN line adaptation circuit 104 is connected via a lead 114 to an hybrid circuit providing the two-wires/four-wires conversion which is particularly described below with respect to 2. The analog signal is then conveyed via a lead 106 to a sigma-delta coder 103 which will be described in reference with figure 3. Sigma-delta coder 103 is used for converting the analog signal into a train of sigma-delta pulses which is transmitted to a RECEIVE DATA lead 107, at the rate of a sigma-delta clock on a lead 108. The galvanic isolation is provided by an optical barrier, illustrated by a dashed line 109, embodied by means of a set of optocouplers which are located on DIAL PULSE lead 110, on DIAL LOOP lead 111, on OFF HOOK lead 112, on SIGMA_DELTA clock lead 108, on RECEIVE DATA lead 107 and on TRANSMIT DATA lead 113. A power supply circuit 105, described hereinafter with reference to figure 5, is based on a DC/DC converter and provides the required power supply voltage necessitated by the sigma-delta coder 103, the hybrid circuit 102 and the different optocouplers.

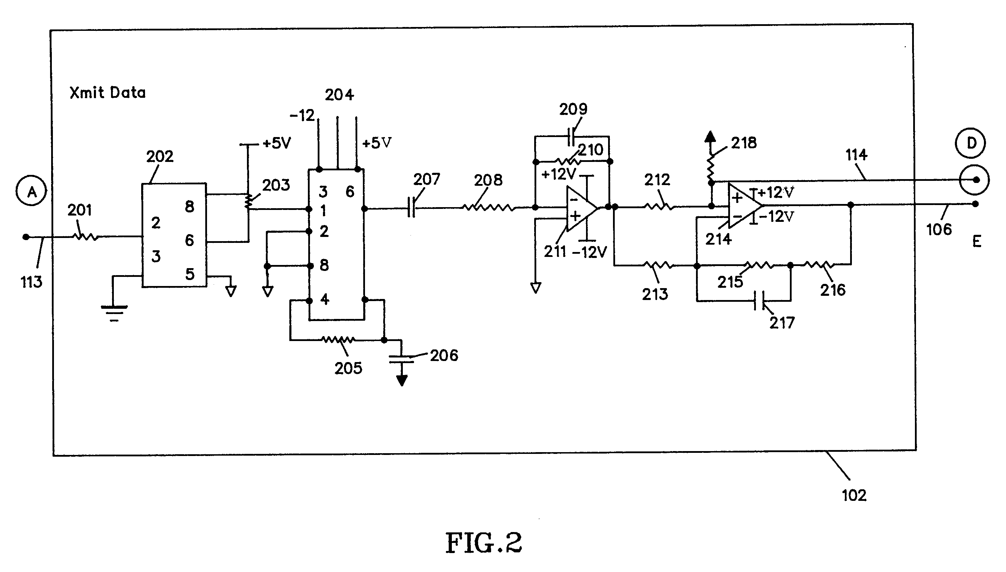

Referring now to figure 2, there is illustrated a preferred embodiment of the hybrid circuit 102. Hybrid circuit 102 receives on Transmit Data (XMIT DATA) lead 113 a train of sigma-delta pulses representative of the analog signal to the transmitted to the telephone network and which is generated inside the system to which the coupler is connected. This train of sigma-delta pulse can be generated by means of a second (not illustrated) sigma-delta coder located within that system. The train of pulse is conveyed through a resistor 201 to the input lead (pin 2) of an optocoupling device 205 which is powered by means of a supply voltage 5V and 0V provided by supply circuit 105. The references indicated on the figure correspond to the pins of an optocoupler referenced 6N136 manufactured by TOSHIBA. A resistor 203 is connected between pin 8 and pin 6 of the latter. It should however be noticed that any equivalent optocoupling device (in terms of speed particularly) could be used in place of the 6N136 optocoupler. The electrical signal is then entered into a 5_order low pass filter 204, such as a LT1063 manufactured by LINEAR TECHNOLOGY based on a switched capacity technology. The frequency cut-off value is chosen so that to match the frequency characteristics of the telephone network and is determined by a couple of resistor 205 and capacitor 206 which are respectively connected between pin 4 and pin 5; and pin 5 and ground. The use of a 5_order low pass filter appears particularly useful for suppressing the energy of the high-order harmonics which will be transmitted to the telephone line. Then, the signal is transmitted to a band-bass amplifier circuit which is based on an operational amplifier 211 powered by means of a +12V, -12V and ground levels which are provided by Power supply 105. The band-pass filter also comprises a resistor 208 in serie with a capacitor 207, the whole serie being connected between the output of filter 204 and the inverting input of OA 211. The band-pass filter is then completed by a resistor 210 and a capacitor 209, connected in parallel between the inverting input and the output of OA 211. The values of resistances 208, 210 and capacitors 207 and 209 are selected so as to match the frequency characteristics of the 300-3400 Hz band width telephone line. Then the signal is entered into an hybrid circuit which is based on OA 214 associated with resistors 212, 213, 215, 216, 218 and capacitor 217. The output of OA 211 is connected to a first lead of resistor 212 and to a first lead of resistor 213, a second lead of resistors 221 and 213 being respectively connected to the positive input lead and the negative input lead of OA 214. The positive input lead is also connected to lead 114 communicating with PSTN line adaptation circuit (reference D) and to resistor 218 having its other lead connected to ground. The negative input lead of OS 214 is also connected to a first lead of a branch comprised of resistors 215 and 216 in serie, the opposite lead being connected to the output lead of OA 214. Capacitor 217 is connected in parallel with resistor 215 and provides an average rejection which matches most of the european telephone lines. In this respect, it should be noticed that since the hybrid circuit 102 according to the invention does not use any transformer for interfacing the telephone line, ie the positive input lead of OA 214 directly receives the analog signal on lead 114 which is transmitted and received from the telephone line, the rejection is also greatly improved. This results from the fact that a transformer deeply modifies the impedance characteristics seen by the circuit to which it is connected. Further, the suppression of the transformer at this point of the circuit also provides an improvement of the reflexion factor. At last, the insertion loss due to the resistive wiring of a transformer and which traditionaly has to be compensated is also suppressed. The output of OA 214 generates a receive signal on lead 106 (referred E) which is then transmitted to the sigma-delta coder illustrated in figure 3. OA 214 receives +12V, -12V and ground supply voltages provided by voltage supply circuit 105.

With respect to figure 3, there is illustrated the double-loop sigma-delta converter which is used for converting the analog signal provided by hybrid circuit 102 into a train of sigma-delta pulses which is transmitted to the personal system thereto connected. This sigma-delta converter is particularly described in european patent application n[ 91480009.9 filed on January 15th 1991, entitled "sigma-delta converter", assigned to the assignee of the present application and which is therein incorporated by simple reference. Briefly, the sigma-delta converter comprises a capacitor 310 receiving the analog signal on lead 106 and which suppresses its DC component. The resulting signal is transmitted to a first lead of a resistor 311 having a second lead respectively connected to the inverting input of an operational amplifier (OA) 314, to a first lead of a resistor 312 and to a first lead of a capacitor 313. The output of the latter operational amplifier is connected to a second lead of capacitor 313 and to a first lead of a resistor 317 having a second lead respectively connected to the inverting input of a second operational amplifier 320, to a first lead of a resistor 318, and to a first lead of a capacitor 319. Operational amplifier 320 has its output lead which is connected to a second lead of capacitor 319. Operational amplifier 320 has its output lead connected to a second lead of capacitor 319 and to the D-input lead of a D-type latch 322, such as a 74AC74N type latch, used as a threshold device. Latch 322 provides at its output lead a sequence of voltages being either equal to 5 volts (supplied by power supply circuit 105) or 0 Volt at the rythm of a SCLK clock existing at its CK input lead (pin 3 in the drawing) and generated at the output of NOR gate 307 as described below. The non-inverted Q output lead of D-latch 322 is connected to a first input of a NOR gate 315 of the type 7402 well known to the skilled man having its second input lead receiving the Sigma-delta SClk clock generated by NOR gate 307, and also an output lead connected to a second lead of resistor 312. The inverted output lead of latch 222 is connected to a first input of a NOR gate 321 which has its second input also receiving the sigma-delta clock Sclk, and an output lead which is connected to a second lead of resistor 318. It appears that the feedback signal appearing at the output of NOR gate 315 is added to the analog input AC voltage to be converter and then integrated by means of the circuit formed by OA 314, resistors 311 and 312 and capacitor 313. Similarly, the feedback signal appearing at the output of NOR 321 is added to the signal at the output of OA 314 and integrated by means of the circuit based on OA 320, resistors 317 and 318, and capacitor 319. Thus a double-loop structure sigma-delta coder is provided allowing a very high level of signal-to-noise ratio. D_latch circuit 322 has a pin 4 which is connected to the +5V voltage via a resistor 341. The positive input lead of OA 314 is connected to a first lead of a capacitor 333 having a second lead connected to ground; and also to a first lead of a resistor 331 having a second lead connected to the output of NOR gate 321. Similarly, the positive input lead of OA 320 is connected to a first lead of a capacitor 334 having a second lead connected to ground; and also to a first lead of a resistor 332 having a second lead connected to the output lead of NOR 315. This provides a compensation of the DC component introduced in the sigma-delta code which is particularly due to the mismatch of the rise and fall time of the latch 322.

The galvanic isolation in sigma-delta converter 103 is provided first by an optocoupler 326 separating the sigma-delta clock on lead 108 (via a resistor 324) and the input lead 301 of the NOR gate 302. In the preferred embodiment of the invention, a circuit referenced TLP2630 manufactured by TOSHIBA is used. It should however be noticed that an other optocoupling device having equivalent performances, particularly capable of transmitting a 2.048MHz frequency, could be used. The RECEIVE DATA on lead 107 is also isolated from the telephone line by means of an optocoupling device 328 of the kind TLP2630 manufactured by TOSHIBA. A resistor 329 is connected between pin 6 and 8, a capacitor 330 is connected between pin 8 and 5. Pin 8, 5 and 3 are respectively connected to +5V and ground.

The Sclk sigma-delta clock is provides as follows: a NOR gate 302, mounted as an inverter, receives at its two input leads a squared wave clock signal having the desired sigma-delta frequency value, e.g. 2.048 Mhz in the preferred embodiment of the invention. The output of NOT gate 302 is connected to a first lead of a resistor 304, to a first lead of a resistor 303 having its second lead connected to the voltage supply (5 Volts in the preferred embodiment), and to a first input of a NOR gate 307. Resistor 304 has a second input lead which is connected to a first input of a capacitor 306 having a second lead connected to ground, and to the two input leads of a NOR gate 305, the output of which being connected to a second input of NOR 307. The output of NOR gate 307 eventually provides on a lead 308 the required Sclk clock. As explained in the above mentioned patent application, the use of NOR gates 315 and 321 which are driven at the rate of the Sclk sigma-delta clock provides a return-to-zero of the sigma-delta code generated at the output of the D_latch 322 at every period of the sigma-delta clock whereby the sigma-delta converter becomes insensitive to the asymmetry of the rise and fall time fo the threshold device. This results in an substantial increase of the signal-to-noise ratio.

With respect to figure 4, there is described the PSTN line adaptation circuit 104 of the coupling interface according to the present invention. PSTN line adaptation circuit 104 performs the functions LINE SEIZE, decadic pulsing, and also the AC and DC adaptation to the telephone line. Such a circuit is particularly described in the european patent applications n^{o}90480204.8 and n^{o}90480203.0, filed on December 5th 1990, assigned to the assignee of the present application and which are therein incorporated by reference. In the preferred embodiment of the invention, the OFF-HOOK function is provided by means of static relays or opto-relays 402 which is controlled by means of the personal system connected to the coupler via a resistor 401 and lead 112 (ref. F). Similarly, the DIAL LOOP function is achieved by means of an additional static relay 404 which is controlled by the personal system via DIAL_LOOP lead 111 (ref. G) and resistor 403. At last, the DIAL PULSE function is carried out by means of a static relay 406 which is controlled by the personal system via DIAL PULSE lead 100 (Ref. H) and a resistor 405. The AC and DC line impedance adaptation of the line is achieved by means of specific chip 411 referred TEA 7868 manufactured by THOMSON. This chip is directly powered from the telephone line by means of the set of 4 diods which are mounted in order to form a double-wave rectifier 450. Pin 1 of the latter circuit receives the positive voltage which is also connected via a capacity 408 to lead 114 (ref. D), and is also connected to a first lead of a Zener Diod 410 connected at its other end to the negative voltage supplied by the 4-diod bridge. Zener diod 410 is used for eliminating transiants overvoltages which might appear on the telephone line and which could destroy chip 411. Chip 411 has its pins 3 and 4 which are respectively connected to the negative voltage provided by the 4-diods bridges via a resistor 412 and 413. Pin 8 is also connected to that negative voltage, the latter being decoupled from the ground by means of a capacitor 415. A capacitor 414 is then connected between pin 2 and pin 8 and a resistor 409 is connected between pin 1 and pin 2. It appears that the galvanic isolation between the telephone line and the system to which is connected the coupling interface according to the present invention is achieved by means of the set of static relays, or opto-relays 402, 404 and 406.

Figure 5 illustrates the structure of the power supply circuit 105 which is required for providing the different voltages needed in the coupling interface according to the present invention, and particularly for supplying current to the sigma-delta coder 103 and the different optocoupling devices. This power supply unit is isolated from the system to which is connected the coupler thereby achieving and completing the full galvanic isolation between the telephone line and the data processing system, or the DCE communicating through it. In the preferred embodiment of the invention, power supply 105 comprises a DC/DC converter 501, for instance a converter known under the reference A212 and manufactured by ISODIP, for delivering positive 12V voltage, negative 12V voltage and the ground voltage. The +5 V voltage which is required for logic circuits (for instance D_latch 322 and the different NOR gates) is derived from the +12V by means of a regulator of the type 78L05. It should be noted that the power supply 105 could also be fully embodied by means of discrete components. In order to achieve appropriate galvanic isolation, power supply circuit 105 is embodied by means of a transformer allowing 2000 V dielectric strength. Since this isolation transformer will not receive nor transmit the analog signal on the telephone line, its effects on the signal-to-noise ratio, the distorsion etc... are negligible. Therefore, the large, high-quality sophisticated and costly line transformer which is traditionaly needed in known couplers can be avoided. This have been made possible by separating the two functions which are traditionaly performed by the line transformer: carrying out the line interface (ie receiving and transmitting the analog signal conveyed through the line) and achieving the galvanic isolation. By separating those two distinctive functions, and by respectively assigning them to distinctive units, ie a sigma-delta converter associated with appropriate optocouplers, and a transformer also associated with optocouplers, the miniaturisation of a coupler authorizing high performance is made possible.

## Claims

1. Coupling device for allowing the connection of a system such as a Data Circuit Terminating equipment (DCE) or a computer to a Public Swithced Telephone network (PSTN) characterized in that it includes a A/D converter (103) for converting the analog signal received and transmitted to the telephone line in a set of digital words representative of said analog signal so that the information which is exchanged between said system and said coupler is in a digital form, a first set of optical-couplers receiving and transmitting said digital words from and to said system for introducing a galvanic isolation between said system and said coupling device, static relays for introducing a galvanic isolation between said coupling device and the switching leads (110, 111, 112) under the control of said system and operating the switching functions such as seizing or dialing.

2. Coupling device according to claim 1 characterized in that said second static relays are optical relays.

3. Coupling device according to claim 1 or 2 characterized in that said A/D converter is a sigma-delta coder for converting an analog signal in a train of sigma-delta pulses which is transmitted to said system via an optical coupler operating at the speed of the sigma-delta clock, said sigma-delta clock being provided by said system via an optical coupler.

4. Coupling device according to claim 3 characterized in that said sigma-delta coder is a double-loop sigma-delta coder.

5. Coupling device according to claim 2 or 3 characterized in that said sigma-delta coder includes a threshold device (322) for generating an output and feedback signal, a filter (314, 329) receiving said analog input signal and said output and feedback signal by means of at least one feedback loop,
means (315, 321) located in said at least one feedback loop for performing a return-to-specified-logical-state of the sigma-delta code generated by said threshold device at every period of the sigma-delta clock whereby the converter is insensitive to the asymmetry of the rise and fall time of the threshold device.

6. Coupling device according to claim 5 characterized in that it further includes:
- a first integrator (314, 313, 311, 312) receiving said analog input signal coming from said telephone line, and a first feedback signal coming from a first feedback loop,
- a second integrator (320, 317, 318, 319) receiving the analog output of said first integrator and a second feedback signal coming from a second feedback loop and having an output lead connected to said threshold device,
- first means (315, 308) for performing a return-to-zero of the feedback signal conveyed through said first feedback loop to said first integrator,
- second means (321, 308) for performing a return-to-zero of the feedback signal conveyed through said second feedback loop to said second integrator.

7. Coupling device according to claim 6 characterized in that said first and second means for performing a return-to-zero of the feedback signals conveyed through the both feedback loop comprises NOR gates (315, 321) connected to said threshold device (222) and receiving said sigma-delta clock.

8. Coupling device according to claim 6 characterized in that said sigma-delta converter further includes:
- a latch (322) clocked by a sigma-delta clock (Sclk) coming from said system via an optical coupler (326) and generating a sigma-delta code at a first output lead and an inverted sigma-delta code at a second output lead,
- a first integrator (314, 311, 312, 313) receiving the analog signal from the telephone line to be converted and a first feedback signal coming from a first NOR gate (315) having a first input connected to said clock and a second input connected to said first output of said latch (322),
- a second integrator (320, 317, 318, 319) receiving the output signal of said first integrator and a second feedback signal coming from a second NOR gate (321) having a first input receiving said clock and a second input connected to said second output of said latch (322).

9. Coupling device for allowing the connection of a personal system to a Public Switched Telephone Network (PSTN) including:
- means (104) for realizing DC and AC electrical adaptation with the tip-ring leads of the telephone line and for providing seizing and decadic pulsing functions under control of said system via switching leads (100, 111, 112),
- hybrid means (102) for providing a two-wires/four-wires conversion between said telephone line, transmit (117) and receive leads (107) connected to said system communicating through said telephone line,
characterized in that it further includes:
- a A/D converter (103) for converting the analog signal received from said hybrid into a set of digital pulses representative of the analog signal to be converted and a first optical barrier (326, 328) for introducing a galvanic isolation between said transmit (113) and receive (107) leads and said personal system,
- a second optical barrier located on said switching leads for introducing a galvanic isolation between said personal system and said adaptation means (104).

10. Coupling device according to claim 9 characterized in that said A/D converter is a sigma-delta coder for converting an analog signal in a train of sigma-delta pulses which is transmitted to said system via an optical coupler operating at the speed of the sigma-delta clock.

11. Coupling device according to claim 10 characterized in that said sigma-delta coder includes a threshold device (322) for generating an output and feedback signal, a filter (314, 329) receiving said analog input signal and said output and feedback signal by means of at least one feedback loop, means (315, 321) located in said at least one feedback loop for performing a return-to-specified-logical-state of the sigma-delta code generated by said threshold device at every period of the sigma-delta clock whereby the converter is insensitive to the asymmetry of the rise and fall time of the threshold device.

12. Coupling device according to claim 11 characterized in that it further includes:
- a first integrator (314, 313, 311, 312) receiving said analog input signal coming from said telephone line, and a first feedback signal coming from a first feedback loop,
- a second integrator (320, 317, 318, 319) receiving the analog output of said first integrator and a second feedback signal coming from a second feedback loop and having an output lead connected to said threshold device,
- first means (315, 308) for performing a return-to-zero of the feedback signal conveyed through said first feedback loop to said first integrator,
- second means (321, 308) for performing a return-to-zero of the feedback signal conveyed through said second feedback loop to said second integrator.

13. Coupling device according to claim 12 characterized in that said first and second means for performing a return-to-zero of the feedback signals conveyed through the both feedback loop comprises NOR gates (315, 321) connected to said threshold device (222) and receiving said sigma-delta clock.

14. Coupling device according to claim 13 characterized in that said sigma-delta converter further includes:
- a latch (322) clocked by a sigma-delta clock (Sclk) coming from said system via an optical coupler (326) and generating a sigma-delta code at a first output lead and an inverted sigma-delta code at a second output lead,
- a first integrator (314, 311, 312, 313) receiving the analog signal from the telephone line to be converted and a first feedback signal coming from a first NOR gate (315) having a first input connected to said clock and a second input connected to said first output of said latch (322),
- a second integrator (320, 317, 318, 319) receiving the output signal of said first integrator and a second feedback signal coming from a second NOR gate (321) having a first input receiving said clock and a second input connected to said second output of said latch (322).

15. Data circuit terminating equipment including the coupling device according to anyone of claims 1-8.

16. Personal system including a coupling device according to anyone of claims 9-14.
